# EUROPEAN PATENT APPLICATION

(11) **EP 1 845 609 A2**
(43) Date of publication of application: **17.10.2007**
(21) Application number: 07106012.3
(22) Date of filing: 12.04.2007
(51) Int. Cl.: H02P 6/00, H02P 6/08

(54) **A control circuit device for a direct-current, three-phase, brushless motor**

(30) Priority: 14.04.2006 IT TO20060283
(71) Applicant: JOHNSON ELECTRIC MONCALIERI S.r.l., 10123 Torino (IT)
(72) Inventor: Piazza, Massimo, 10134 Torino (IT); Iosca, Francesco, 10154 Torino (IT)
(74) Representative: Quinterno, Giuseppe

(57) **Abstract**

The device comprises a full bridge circuit (1) and an electronic control and driving unit (ECU) arranged to drive the upper switches (Q1-Q3) and the lower switches (Q1'-Q3') of the bridge circuit (1) in operation with respective sets of three driving signals (SQ1, SQ2, SQ3; SQ1', SQ2', SQ3') which are offset relative to one another by about 180 electrical degrees, each set of three comprising three driving signals (SQ1, SQ2, SQ3; SQ1', SQ2', SQ3') which are offset relative to one another by about 120 electrical degrees and each of which comprises an active portion that extends through about 120 electrical degrees, alternating with an inactive or de-activation portion that extends through about 240 electrical degrees.

Each active portion of each driving signal (SQ1, SQ2, SQ3; SQ1', SQ2', SQ3') of each set of three has an initial pulsed activation period (Iᵢ), an intermediate continuous activation period (I_{M}), and a final pulsed activation period (I_{f}), the intermediate continuous activation period (I_{M}) having an extent in electrical degrees greater than that of each pulsed activation period (Iᵢ, If).

## Description

The present invention relates to a control circuit device for a direct-current, brushless motor.

More specifically, the subject of the invention is a control circuit device for a three-phase brushless motor, comprising:
a full bridge circuit including three circuit branches connected between the two terminals of a direct-current voltage supply, each branch comprising an upper electronic switch and a lower electronic switch which are connected to one another and are connected to the positive terminal and to the negative terminal of the supply, respectively, each of the windings or phases of the brushless motor being connected to an intermediate point between the two switches of a corresponding branch of the bridge circuit, and
electronic control and driving means arranged to drive the upper and lower switches of the bridge circuit in operation with respective sets of three driving signals which are offset relative to one another by about 180 electrical degrees, each set of three comprising three driving signals which are offset relative to one another by about 120 electrical degrees and each of which comprises an active portion that extends through about 120 electrical degrees, alternating with an inactive or de-activation portion that extends through about 240 electrical degrees.

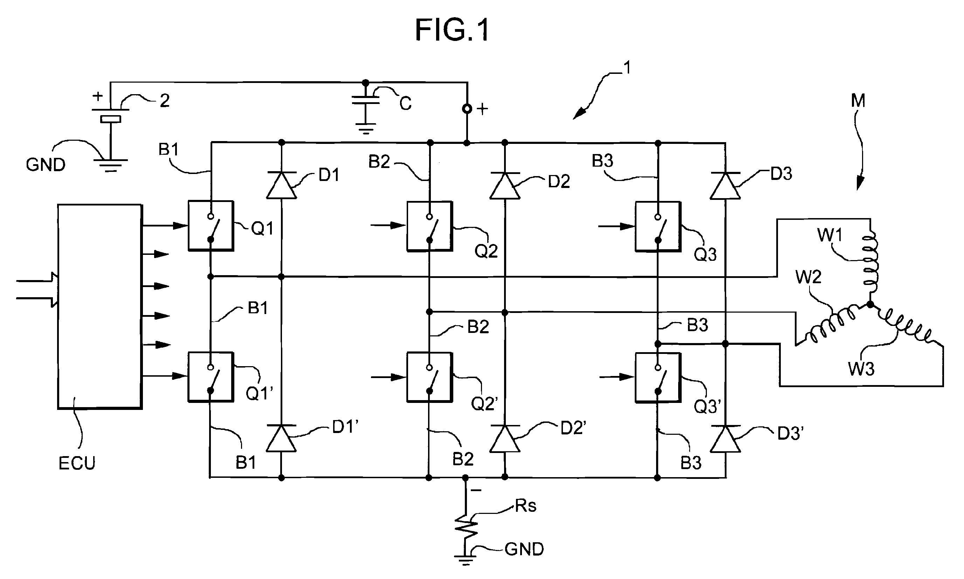

Figure 1 shows a control circuit device for a direct-current, three-phase, brushless motor the general architecture of which corresponds to that of the control circuit device defined above. This control device comprises a full bridge circuit 1 which includes three circuit branches B1, B2, B3, connected between the two terminals of a direct-current voltage supply 2 which, in the embodiment shown, has its negative terminal connected to an earth conductor GND.

The branches B1, B2 and B3 of the bridge circuit 1 comprise respective upper electronic switches Q1, Q2 and Q3 and respective lower electronic switches Q1', Q2' and Q3' which are connected to one another in order and are connected to the positive terminal and to the negative terminal of the supply 2, respectively.

The bridge circuit 1 is connected to a brushless motor M having three phases or windings W1, W2 and W3 which are interconnected in a star arrangement and each of which is connected to an intermediate point between the two electronic switches of a corresponding branch of the bridge circuit.

A respective freewheeling diode D1-D3, D1'-D3' is connected in parallel with each electronic switch Q1-Q3, Q1'-Q3', in known manner. Moreover, a capacitor C is connected in parallel with the bridge circuit 1, also in known manner.

A shunt resistor R_{S} is interposed between the lower switches Q1', Q2' and Q3' and the earth GND to detect the current flowing through the motor.

The control inputs of the switches of the bridge circuit 1 are connected to corresponding outputs of an electronic control and driving unit, generally indicated ECU. This unit is arranged to drive the electronic switches of the bridge circuit 1 in accordance with predetermined procedures, in response to external signals and, optionally, to signals generated within it. For example, three position sensors such as Hall-effect sensors or other sensors for detecting the instantaneous position of the rotor of the motor M may be connected to the control unit ECU. Alternatively, the instantaneous position of the rotor of the motor M may be deduced, in known manner, by analysis of the back electromotive forces developed in the motor windings or phases W1, W2 and W3.

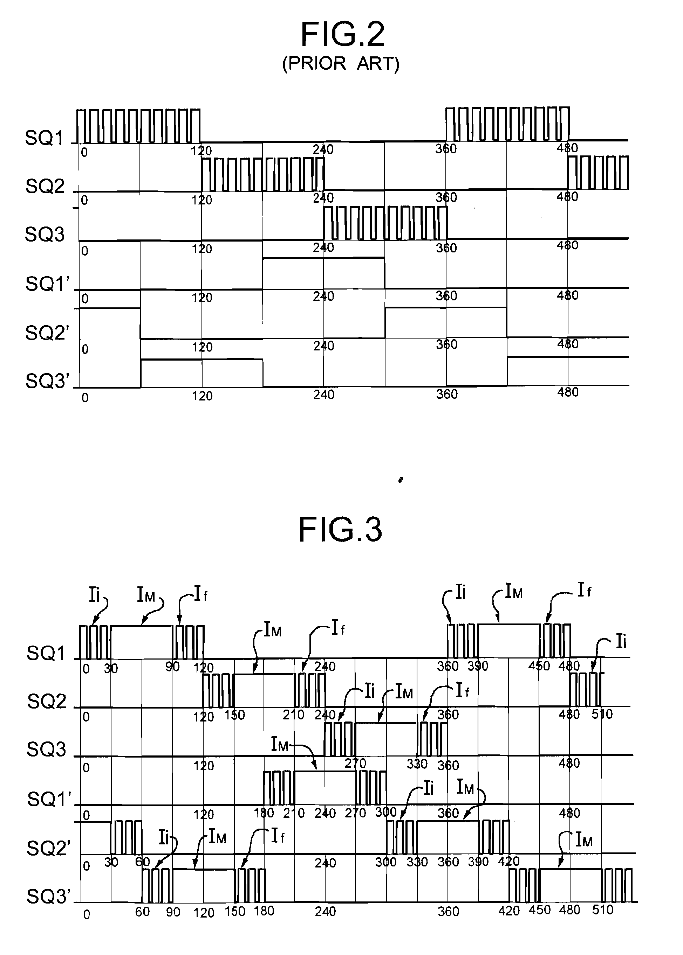

In a driving procedure according to the prior art, the electronic unit ECU is arranged to drive the upper switches Q1, Q2 Q3 and the lower switches Q1', Q2', Q3' of the bridge circuit 1 in operation with respective sets of three driving signals which are offset relative to one another by about 180 electrical degrees, each set of three comprising three driving signals offset relative to one another by about 120 electrical degrees and each comprising an active portion for about 120 electrical degrees, alternating with an inactive or de-activation portion that extends through about 240 electrical degrees. The driving signals applied to the electronic switches of the bridge 1 may be, for example, those signals examples whose traces are shown qualitatively in Figure 2. In that drawing, the driving signal applied to a generic electronic switch i of the bridge circuit 1 is indicated SQi.

In the example shown in Figure 2, the active portions of the driving signals SQ1, SQ2, SQ3 applied to the upper switches Q1, Q2, Q3 of the bridge circuit 1 are pulsed signals of modulated duration or width (PWM). The active portions of the driving signals SQ1', SQ2', SQ3' applied to the lower electronic switches Q1', Q2', Q3', however, are continuous activation signals.

The driving procedure according to the prior art shown in Figure 2 is quite easy to implement but is liable to create a ripple of negative torque during the initial 30 electrical degrees of each active portion of the driving signals for the upper switches of the bridge circuit; in one respect, this leads to a reduction in efficiency but, above all, it causes the generation of an undesirable acoustic noise.

A further problem of the above-described solution according to the prior art lies in the non-optimal distribution of the power dissipation between the upper and lower switches of the bridge circuit.

An object of the present invention is to provide a control circuit device for a direct-current, three-phase, brushless motor which overcomes the above-described problems of the devices of the prior art.

This and other objects are achieved according to the invention by a control circuit device of the type specified above, characterized in that the electronic control and driving means are arranged in a manner such that each active portion of each driving signal of each set of three has an initial pulsed activation period, an intermediate continuous activation period, and a final pulsed activation period, the intermediate continuous activation period having an extent in electrical degrees greater than that of each pulsed activation period.

Advantageously, for each activation portion of the driving signals, the intermediate continuous activation period has a duration corresponding to about 60 electrical degrees and each pulsed activation period has a duration corresponding to about 30 electrical degrees.

Further characteristics and advantages of the invention will become clear from the following detailed description which is given purely by way of non-limiting example, with reference to the appended drawings, in which:
- Figure 1, which has already been described, shows a general architecture of a control circuit device for a direct-current, three-phase, brushless motor,
- Figure 2, which has also already been described, shows examples of traces of driving signals according to the prior art for the upper and lower electronic switches of a bridge circuit according to Figure 1,
- Figure 3 is a series of graphs which show qualitatively, as functions of the time t given on the abscissa, examples of traces of driving signals according to the present invention for the upper and lower switches of the bridge circuit according to Figure 1, and
- Figure 4 shows an embodiment of the electronic control and driving means for a device according to the present invention.

With reference to the drawings, a control circuit device for a direct-current, three-phase, brushless motor M according to the invention has the same general architecture as described above with reference to Figure 1.

In a control device of this type according to the present invention, the unit ECU is in fact arranged to generate driving signals such that each active portion of each driving signal SQ1-SQ3, SQ1'-SQ3' (Figure 3) has an initial pulsed activation period Iᵢ, an intermediate continuous activation period I_{M}, and a final pulsed activation period I_{f}.

Each intermediate continuous activation period I_{M} has an extent in electrical degrees greater than that of each pulsed activation period Iᵢ or I_{f}.

Advantageously, in each active portion of the driving signals SQ1-SQ3, SQ1' -SQ3', the intermediate continuous activation period I_{M} has a duration corresponding to about 60 electrical degrees and each pulsed activation period Iᵢ or I_{f} has a duration corresponding to about 30 electrical degrees.

In each pulsed activation period, the active portion of each driving signal comprises a plurality of pulses of modulated duration (width) (PWM).

By virtue of the driving procedure described above with reference to Figure 3, a control device according to the present invention reduces the noise generated as a result of the negative torque ripple in operation. An improvement in driving efficiency is also achieved and improved distribution of the power dissipation between the upper and lower switches of the bridge circuit is ensured.

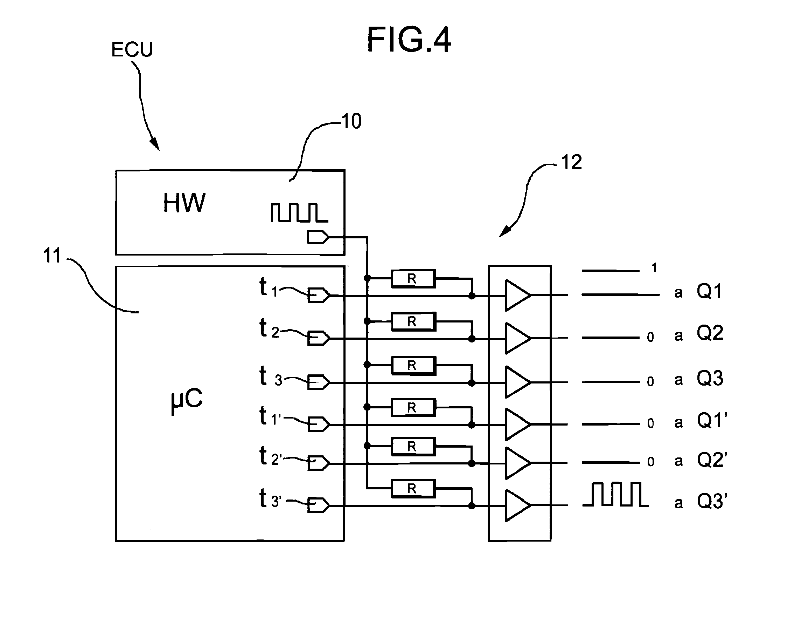

Figure 4 shows, purely by way of non-limiting example, an embodiment of the control unit ECU for a device according to the invention. In this embodiment, the unit ECU comprises a pulsed signal (PWM) generator, generally indicated 10, a micro-controller 11, and a connection network, generally indicated 12.

The micro-controller 11 has a plurality of terminals t1-t3, t1'-t3' associated with the upper switches Q1-Q3 and with the lower switches Q1'-Q3' of the bridge circuit 1, respectively. These terminals of the micro-controller 11 are of the type with three states ("tri-state" terminals), that is, they can adopt a first and a second logic state or level ("1" or "0") corresponding to continuous activation and to de-activation of the corresponding electronic switches of the bridge circuit 1, respectively, and a third, high-impedance state.

The output of the pulsed signal generator 10 is connected to the output terminals of the micro-controller 11 by means of the network 12. This network comprises a plurality of impedances (resistors of resistance R) each having one terminal connected to the output of the generator 10 and the other terminal connected to a corresponding output terminal of the microcontroller 11. The arrangement is such that, when a terminal of the micro-controller 11 adopts the high-impedance state, the pulsed signal emitted by the generator 10 is applied to the corresponding electronic switch of the bridge circuit 1.

Figure 4 shows, by way of example, a situation in which the terminal t1 of the micro-controller 11 is at level "1" and causes continuous activation of the electronic switch Q1 of the bridge circuit 1, the terminals t2 and t3, as well as the terminals t1' and t2' are at level "0" and keep the associated switches Q2, Q3 and Q1' and Q2' of the bridge circuit 1 de-activated whilst, finally, the terminal t3' is in the high-impedance state for which the pulsed signal emitted by the generator 10 is applied to the switch Q3' of the bridge circuit 1. This situation is, for example, that which occurs in the second half of the intermediate continuous activation period I_{M} of the driving signal SQ1 of the graphs of Figure 3.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A control circuit device for a direct-current, three-phase, brushless motor (M), comprising:
a full bridge circuit (1) including three circuit branches (B1, B2, B3) connected between the two terminals of a direct-current voltage supply (2), each branch (B1, B2, B3) comprising an upper electronic switch (Q1, Q2, Q3) and a lower electronic switch (Q1', Q2', Q3') which are connected to one another and are connected to the positive terminal and to the negative terminal of the supply (2), respectively, each of the windings or phases (W1, W2, W3) of the motor (M) being connected to an intermediate point between the two switches (Q1, Q1'; Q2, Q2'; Q3, Q3') of a corresponding branch (B1, B2, B3) of the bridge circuit (1), and
electronic control and driving means (ECU) arranged to drive the upper switches (Q1-Q3) and the lower switches (Q1'-Q3') of the bridge circuit (1) in operation with respective sets of three driving signals (SQ1, SQ2, SQ3; SQ1', SQ2', SQ3') which are offset relative to one another by about 180 electrical degrees, each set of three comprising three driving signals (SQ1, SQ2, SQ3; SQ1', SQ2', SQ3') which are offset relative to one another by about 120 electrical degrees and each of which comprises an active portion that extends through about 120 electrical degrees, alternating with an inactive or de-activation portion that extends through about 240 electrical degrees,
the control device being **characterized in that** the electronic control and driving means (ECU) are arranged in a manner such that each active portion of each driving signal (SQ1, SQ2, SQ3; SQ1', SQ2', SQ3') of each set of three has an initial pulsed activation period (Iᵢ), an intermediate continuous activation period (I_{M}), and a final pulsed activation period (I_{f}), the intermediate continuous activation period (I_{M}) having an extent in electrical degrees greater than that of each pulsed activation period (Iᵢ, I_{f}).

2. A device according to Claim 1 in which, for each active portion of the driving signals (SQ1-SQ3; SQ1'-SQ3'), the intermediate continuous activation period (I_{M}) has a duration corresponding to about 60 electrical degrees and each pulsed activation period (Iᵢ, I_{f}) has a duration corresponding to about 30 electrical degrees.

3. A device according to Claim 1 or Claim 2 in which, in each pulsed activation period (Iᵢ, I_{f}), the active portion of the driving signals (SQ1-SQ3; SQ1'-SQ3') comprises a plurality of pulses of modulated duration (width) (PWM).

4. A device according to any one of the preceding claims in which the electronic control and driving means (ECU) comprise:
a pulsed signal generator (10),
a micro-controller (11) having a plurality of terminals with three states (tri-state terminals) (t1-t3; t1'-t3') which are connected, in order, to the corresponding driving inputs of the electronic switches (Q1-Q3; Q1'-Q3') of the bridge circuit (1), the terminals (t1-t3; t1'-t3') being capable of adopting a first and a second logic state or level, to which continuous activation and de-activation of the corresponding electronic switches of the bridge circuit (1) correspond, respectively, and a third, high-impedance state, and
a connection network (12) which connects the output of the pulsed signal generator (10) to the terminals (t1-t3; t1'-t3') of the micro-controller (11) in a manner such that, when the terminals adopt the high-impedance state, the pulsed signal emitted by the generator (10) is applied to the corresponding electronic switches of the bridge circuit (1).
